# EUROPEAN PATENT APPLICATION

(11) **EP 2 728 125 A1**
(43) Date of publication of application: **07.05.2014**
(21) Application number: 13005158.4
(22) Date of filing: 31.10.2013
(51) Int. Cl.: F01D 11/24

(54) **Method of forming a ceramic matrix composite component and corresponding ceramic matrix composite gas turbine engine component**

(30) Priority: 02.11.2012 GB 201219706
(71) Applicant: Rolls-Royce plc, London SW1E 6AT (GB)
(72) Inventor: Hillier, Steven, Manchester M24 1HU (GB)
(74) Representative: Hartley, Andrew Colin

(57) **Abstract**

A method of forming a ceramic matrix composite gas turbine engine component includes the steps of: providing a plurality of green sub-elements of the component, each sub-element containing stacked plys of continuous fibre reinforcement embedded in a green ceramic matrix; assembling the sub-elements into an arrangement in which each sub-element contacts at least one other sub-element, the arrangement corresponding in shape to the final component; and sintering the assembled sub-elements to fuse the ceramic matrix within each sub-element and between contacting sub-elements, thereby forming the component as a ceramic matrix composite unitary body. An alternative method includes ceramic cement being provided at the contact interfaces between the sub-elements and the assembled sub-elements to fuse the ceramic cement, thereby forming the component as a ceramic matrix composite unitary body.

## Description

### Field of the Invention

The present invention relates to a method of forming a ceramic matrix composite gas turbine engine component.

### Background of the Invention

The performance of gas turbine engines, whether measured in terms of efficiency or specific output, is improved by increasing the turbine gas temperature. It is therefore desirable to operate the turbines at the highest possible temperatures. For any engine cycle compression ratio or bypass ratio, increasing the turbine entry gas temperature produces more specific thrust (e.g. engine thrust per unit of air mass flow). However, as turbine entry temperatures increase, it is necessary to develop components and materials better able to withstand the increased temperatures.

This has led, for example, to the replacement of metallic shroud segments with ceramic matrix composite shroud segments having higher temperature capabilities. To accommodate the change in material, however, adaptations to the segments have been proposed. For example, EP 0751104 discloses a ceramic segment having an abradable seal which is suitable for use with nickel base turbine blades, and EP 1965030 discloses a hollow section ceramic seal segment.

A conventional method of attaching shroud segments to other components is a "birdmouth" type assembly, in which a slot in one component is attached to a hook in another component. When assembled, the two components can then locate across an interface which is perpendicular to the direction of the primary load.

However, such an assembly approach can be problematic to implement in a ceramic matrix composite component. For example, to accommodate a slot in such a component, reinforcing fibres in the composite may have to bend around the slot, which can result in delamination, excessive porosity and fibre breakage in the composite. More generally, features such as bends, joints and changes in thickness of a component can all lead to similar problems.

### Summary of the Invention

It would be desirable to provide a method of forming a ceramic matrix composite gas turbine engine component in which a high degree of control can be exerted on the material properties of the component.

Accordingly, in a first aspect, the present invention provides a method of forming a ceramic matrix composite gas turbine engine component, the method including the steps of:
providing a plurality of green sub-elements of the component, each sub-element containing stacked plys of continuous fibre reinforcement embedded in a green ceramic matrix;
cutting one or more apertures in the sub-elements, the apertures being configured such that in the final component they interconnect to form one or more internal cavities;
assembling the sub-elements into an arrangement in which each sub-element contacts at least one other sub-element, the arrangement corresponding in shape to the final component; and
sintering the assembled sub-elements to fuse the ceramic matrix within each sub-element and between contacting sub-elements, thereby forming the component as a ceramic matrix composite unitary body.

In a related second aspect, the present invention provides a method of forming a ceramic matrix composite gas turbine engine component, the method including the steps of:
providing a plurality of sintered sub-elements of the component, each sub-element containing stacked plys of continuous fibre reinforcement embedded in a sintered ceramic matrix;
cutting one or more apertures in the sub-elements, the apertures being configured such that in the final component they interconnect to form one or more internal cavities;
assembling the sintered sub-elements into an arrangement in which each sub-element contacts at least one other sub-element, the arrangement corresponding in shape to the final component, and ceramic cement being provided at the contact interfaces between the sub-elements; and
sintering the assembled sub-elements to fuse the ceramic cement, thereby forming the component as a ceramic matrix composite unitary body.

In the method of the first aspect, green sub-elements are assembled and then sintered together, while in the method of the second aspect, sintered sub-elements are assembled and then cemented together. In both methods, however, by forming the component from a plurality of sub-elements, it possible to exert greater control over the materials properties of the ceramic matrix composite. In particular, the methods allow the component to have, e.g. hollow sections, bends, joints and changes of thickness without these features having such an impact on the properties.

In a third aspect, the present invention provides a ceramic matrix composite gas turbine engine component formed by the method of the first or second aspect.

Optional features of the invention will now be set out. Unless indicated otherwise, these are applicable singly or in any combination with any aspect of the invention.

The method of the first aspect may further include the preliminary steps of:
forming one or more green sheets containing stacked plys of continuous fibre reinforcement embedded in a green ceramic matrix; and
cutting the sub-elements from the green sheets.

The method of the second aspect may further include the preliminary steps of:
forming one or more green sheets containing stacked plys of continuous fibre reinforcement embedded in a green ceramic matrix;
cutting the sub-elements from the green sheets; and
sintering the green sub-elements.

Alternatively, the method of the second aspect may further include the preliminary steps of:
forming one or more green sheets containing stacked plys of continuous fibre reinforcement embedded in a green ceramic matrix;
sintering the sheets; and
cutting the sintered sub-elements from the sintered sheets.

In the second aspect, the sintered sub-elements may undergo machining operations before assembly.

Particularly if the external surfaces of the sub-elements are complex in shape, more uniform materials properties can be obtained by forming green sheets that are larger than the sub-elements and cutting the sub-elements from the sheets rather than stacking and embedding plys to the shape of the sub-elements.

The method of the first or second aspect may further including the steps of:
before the assembling step, cutting one or more apertures in the sub-elements, and filling the apertures with a sacrificial material (e.g. a wax or a urea-based material, or possibly a metal with a relatively low melting temperature, for example below 1150°C), the apertures being configured such that in the final component they interconnect to form one or more internal cavities; and
after the assembling step, removing the sacrificial material. In this way, relatively complex internal features, such as air cooling passages, can be formed.

The removal of the sacrificial material may be accomplished during the sintering step by melting out or burning off the sacrificial material, or can be performed before the sintering step, e.g. during drying or consolidation of the green sub-elements. Another option can be to dissolve the sacrificial material.

Before the sintering of the assembled green or sintered sub-elements, the assembled sub-elements can be wrapped in one or more additional plys of continuous fibre reinforcement embedded in ceramic matrix. The additional plys can thereby form a protective envelope reducing the likelihood of delamination at the joints between the sub-elements.The component may be a seal segment for a shroud ring of a rotor of the gas turbine engine.

An example of the component of the third aspect is a ceramic matrix composite gas turbine engine component formed from a plurality of sub-elements, each sub-element containing stacked plys of continuous fibre reinforcement embedded in a ceramic matrix, the sub-elements being assembled into an arrangement in which each sub-element contacts at least one other sub-element, the sub-elements forming a unitary body by virtue of (i) sintering of the ceramic matrices across the contact interfaces between the sub-elements or (ii) the provision of ceramic cement at the contact interfaces between the sub-elements Further optional features of the invention are set out below.

### Brief Description of the Drawings

Embodiments of the invention will now be described by way of example with reference to the accompanying drawings in which:
Figure 1 shows a longitudinal sectional elevation through a ducted fan gas turbine engine;
Figure 2 shows schematically a sectional elevation through a portion of the high pressure turbine of the engine of Figure 1;
Figure 3 shows schematically a perspective view of a seal segment;
Figure 4 shows schematically a ceramic matrix composite green sheet with cut outs corresponding to slices of a body portion of the seal segment of Figure 3;
Figure 5 shows schematically arrangement of the slices of Figure 4 into an assembly corresponding to the final shape of the body portion;
Figure 6 shows schematically a cross-section through a component formed by assembling slices and having an internal cavity;
Figure 7 shows schematically a cross-section through another component formed by assembling slices and having more complex internal cavities; and
Figure 8 shows schematically the slices of Figure 7 before assembly into an arrangement corresponding to the final component.

### Detailed Description and Further Optional Features of the Invention

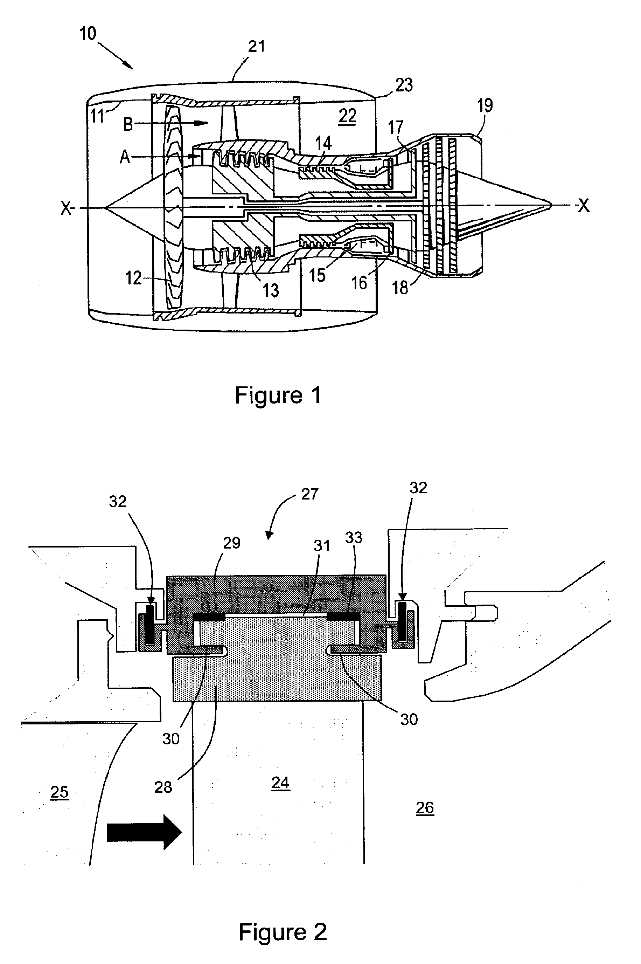

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The high pressure turbine 16 includes an annular array of radially extending rotor aerofoil blades 24, the radially outer part of one of which can be seen if reference is now made to Figure 2, which shows schematically a sectional elevation through a portion of the high pressure turbine. Hot turbine gases flow over nozzle guide vanes 25 and the aerofoil blades 24 in the direction generally indicated by the arrow. A shroud ring 27 in accordance with the present invention is positioned radially outwardly of the shroudless aerofoil blades 24. The shroud ring 27 serves to define the radially outer extent of a short length of the gas passage 26 through the high pressure turbine 16.

The turbine gases flowing over the radially inward facing surface of the shroud ring 27 are at extremely high temperatures. Consequently, at least that portion of the ring 27 must be constructed from a material which is capable of withstanding those temperatures whilst maintaining its structural integrity. Ceramic materials are particularly well suited to this sort of application.

The shroud ring 27 is formed from an annular array of seal segments 28 attached to a part of the engine casing which takes the form of an annular, metallic backing plate 29 having a central portion and radially inwardly projecting, front and rear flanges, with inwardly directed hooks 30 formed at the ends of the flanges. Cooling air for the ring 27 enters a space 31 formed between the backing plate 29, each segment 28 and a gasket-type sealing ring 33 located between the plate 29 and the segment 28, the air being continuously replenished as it leaks, under a pressure gradient, into the working gas annulus through suitable holes (not shown) in the backing plate 29. The backing plate 29 is sealed at its front and rear sides to adjacent parts of the engine casing by piston ring-type sealing formations 32 of conventional design.

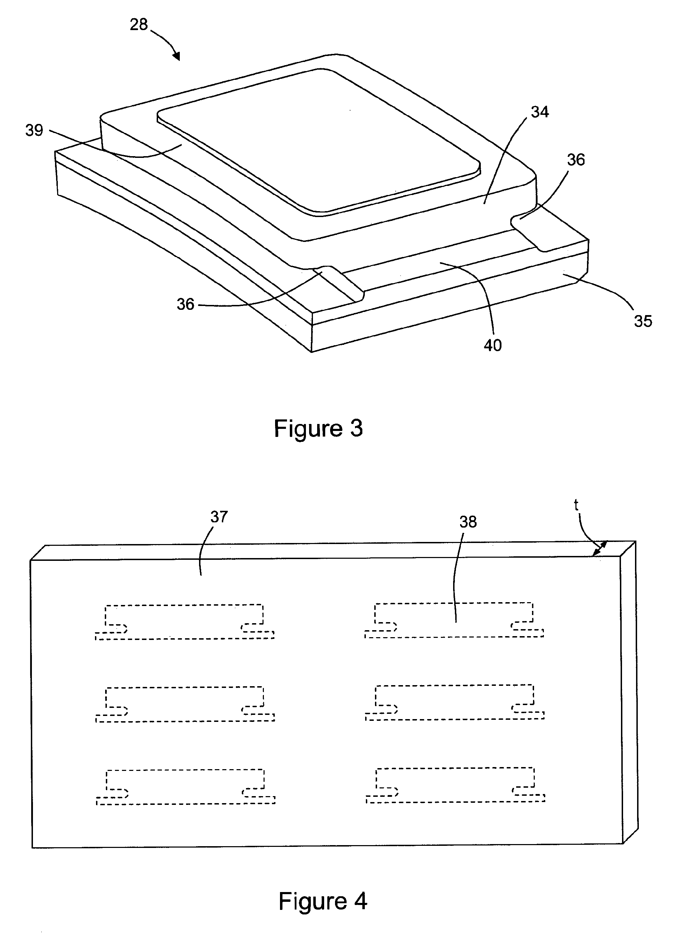

Figure 3 shows schematically a perspective view of one of the seal segments 28. The segment 28 has a lightly curved, plate-like, rectangular shape. A radially outer, body portion 34 of the segment 28 is formed from continuous fibre reinforced ceramic matrix composite, as discussed in more detail below. An abradable coating 35 comprising hollow ceramic spheres in a ceramic matrix, as disclosed in EP 0751104 is formed on the radially inward facing surface of the body portion 34. The abradable coating 35 also acts as a thermal barrier coating. The gasket-type sealing ring 33 (not shown in Figure 3) runs around the edges of the radially outer surface of the body portion 34.

Respective slots 36 extend in the circumferential direction along the front and rear sides of the body portion 34. The backing plate 29 can be machined as a single piece, and then cut in (typically two) pieces. Each seal segment 28 can be mounted to the backing plate by sliding in the circumferential direction onto a respective cut piece of the back plate. The cut pieces are then joined back together again.

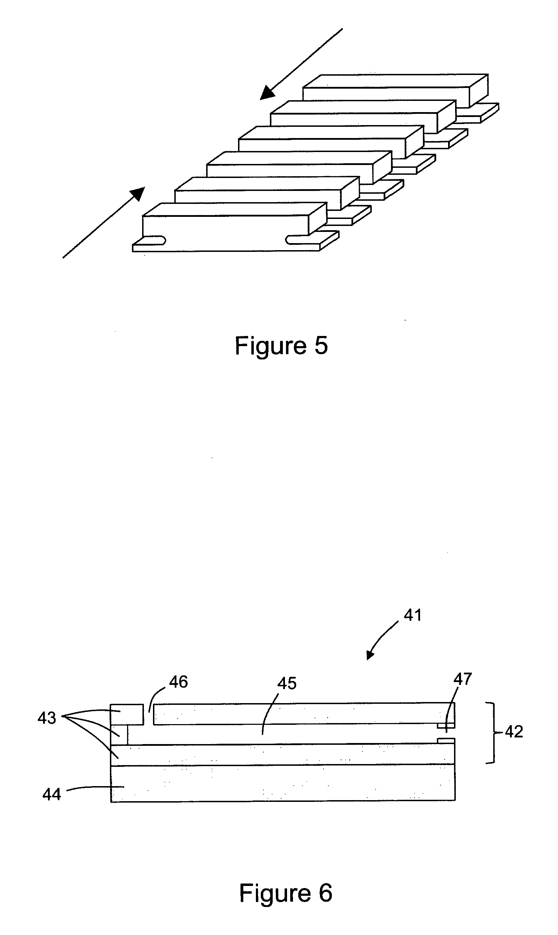

To form body portion 34, a green sheet 37, shown schematically in Figure 4, containing stacked plys of continuous fibre reinforcement embedded in a green ceramic matrix is produced, the plys lying in the plane of the sheet. More particularly, as each ply is stacked it is covered in a slurry containing a binder, water and ceramic. By way of example, the reinforcement fibres can be Nextel720™ or Nextel610™ alumina silicate fibres available from 3M, and the ceramic particles can be alumina particles or a mixture of alumina and silicate particles. The stacked plys are pressed and heated to remove water, the binder acting to form the self-supporting green sheet 37. Using e.g. a CAD system, the body portion 34 is divided into sub-elements, or slices 38, the thickness t of the green sheet 37. The slices 38 are then cut out of the sheet 37, and, as shown schematically in Figure 5, pressed together in an arrangement which corresponds to the final shape of the body portion 34. The pressed slices 38 are heated in a furnace to sinter the ceramic particles. This procedure fuses the ceramic matrix within each slice 38 and between contacting slices 38.

Features, such as a location recess 39 for sealing ring 33, and end shoulders 40 where circumferentially adjacent seal segments 28 join to each other, can be produced by subsequent machining.

The abradable coating 35 can be moulded directly on the body portion 34, or cast separately to the required shape and then glued to the body portion 34, as discussed in EP 0751104.

Advantageously, the material properties of the unitary body portion 34 produced in this way are relatively unaffected by the architecture of the component, and are therefore close to the "standard" properties expected for the composite. Further, large numbers of the body portions can be produced without substantial variation in properties between components. In addition, the production technique allows a relatively complex shaped component to be formed using a base stock material (the sheet 37), and without complex fibre lay up issues.

As a variant to the method, the cut out slices 38 can be heated in the furnace to sinter the ceramic particles before assembly into the shape of the body portion 34. Ceramic cement can then be applied to the contacting surfaces of the assembled sintered slices, which cement is fused to join the slices in a further heating step. Indeed, in a further variant, the sheet 37 can be heated in the furnace to sinter the ceramic particles before the slices 38 are cut out. Again, ceramic cement is used to join the slices.

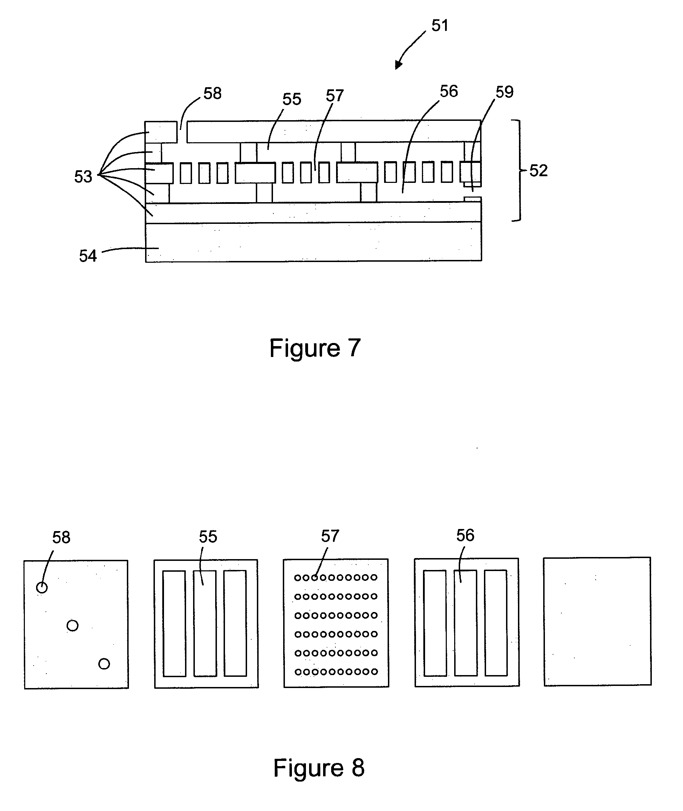

In order to produce internal cavities in a component, such as a seal segment, apertures can be cut from the sub-elements before assembly into the arrangement corresponding to the shape of the final component. For example, Figure 6 shows schematically a cross-section through a component 41 (such as a seal segment or a combustor tile) having a body portion 42 formed from three slices 43 cut from a sheet, and a subsequently applied abradable and/or thermal barrier coating 44. Apertures in the slices 43 interconnect to form a duct 45 (e.g. for cooling air, cabling, or merely to reduce weight) through the component with an entrance 46 hole (exit 47 hole may be formed by subsequent machining). As another example, Figure 7 shows schematically a cross-section through a further component 51 having a body portion 52 formed from five slices 53 cut from a sheet, and a subsequently applied abradable and/or thermal barrier coating 54. Apertures in the slices 53 interconnect to form an air cooling, cascade impingement system having upstream chambers 55, downstream chambers 56, jet-forming apertures 57, and entrance 58 holes (exit 59 holes may be formed by subsequent machining). Figure 8 shows schematically the five slices 53 of Figure 7 arranged side-by-side after cutting from the sheet but before assembly into the arrangement corresponding to the final component.

If the slices are sintered slices, the apertures can be filled with a sacrificial material, such as wax or soluble plastic (urea impregnated), before assembly to prevent ceramic cement inadvertently blocking the internal structure during assembly process. The cemented assembly can be supported and compression applied (e.g. via vacuum bag and auto-clave), excess cement being ejected from the assembly and with the sacrificial material preserving the internal cavities. Once dry there is no further risk to blocking the internal cavities. The assembly can be heated to remove the majority of sacrificial wax or soaked in water to remove sacrificial plastic. The assembly is then put into a furnace for heating and sintering of the assembled slices together, any residual sacrificial material melting away and/or burning off.

If the slices are green slices, to prevent slurry material inadvertently blocking the internal structure when the slices are pressed together in the assembly, the apertures can also be filled with a sacrificial material, such as wax or soluble urea based material, before assembly. The sacrificial material can then be removed after assembly and before sintering in a similar manner to that described above.

The joints in the final component between the slices could be vulnerable to high stresses. Therefore, to improve the capability of the final component, the assembly can be wrapped before the final sintering stage in additional plys of ceramic matrix embedded continuous fibre reinforcement to hold the assembly together.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

All references referred to above are hereby incorporated by reference.

## Claims

1. A method of forming a ceramic matrix composite gas turbine engine component, the method including the steps of:
providing a plurality of green sub-elements (38) of the component, each sub-element containing stacked plys of continuous fibre reinforcement embedded in a green ceramic matrix;
cutting one or more apertures in the sub-elements, the apertures being configured such that in the final component they interconnect to form one or more internal cavities;
assembling the sub-elements into an arrangement in which each sub-element contacts at least one other sub-element, the arrangement corresponding in shape to the final component; and
sintering the assembled sub-elements to fuse the ceramic matrix within each sub-element and between contacting sub-elements, thereby forming the component as a ceramic matrix composite unitary body.

2. A method according to claim 1, further including the preliminary steps of:
forming one or more green sheets (37) containing stacked plys of continuous fibre reinforcement embedded in a green ceramic matrix; and
cutting the sub-elements from the green sheets.

3. A method of forming a ceramic matrix composite gas turbine engine component, the method including the steps of:
providing a plurality of sintered sub-elements of the component, each sub-element containing stacked plys of continuous fibre reinforcement embedded in a sintered ceramic matrix;
cutting one or more apertures in the sub-elements, the apertures being configured such that in the final component they interconnect to form one or more internal cavities
assembling the sintered sub-elements into an arrangement in which each sub-element contacts at least one other sub-element, the arrangement corresponding in shape to the final component, and ceramic cement being provided at the contact interfaces between the sub-elements; and
sintering the assembled sub-elements to fuse the ceramic cement, thereby forming the component as a ceramic matrix composite unitary body.

4. A method according to claim 3, further including the preliminary steps of:
forming one or more green sheets containing stacked plys of continuous fibre reinforcement embedded in a green ceramic matrix;
cutting the sub-elements from the green sheets; and
sintering the green sub-elements.

5. A method according to claim 3, further including the preliminary steps of:
forming one or more green sheets containing stacked plys of continuous fibre reinforcement embedded in a green ceramic matrix;
sintering the sheets; and
cutting the sintered sub-elements from the sintered sheets.

6. A method according to any one of the previous claims further including the steps of:
before the assembling step, filling the apertures with a sacrificial material; and
after the assembling step, removing the sacrificial material.

7. A method according to claim 6, wherein the sacrificial material is a wax or soluble material.

8. A method according to any preceding claim, wherein the internal cavities provide a cooling passage for a cooling airflow in use.

9. A method according to any one of the previous claims further including, before the step of sintering the assembled sub-elements, the step of wrapping the assembled sub-elements in one or more additional plys of continuous fibre reinforcement embedded in ceramic matrix.

10. A method according to any one of the previous claims, wherein the component is a seal segment for a shroud ring of a rotor of the gas turbine engine.

11. A ceramic matrix composite gas turbine engine component formed by the method of any one of the previous claims.
